# EUROPÄISCHE PATENTSCHRIFT

(11) **EP 2 481 765 B1**
(45) Veröffentlichungstag und Bekanntmachung des Hinweises auf die Patenterteilung: **02.04.2014**
(21) Anmeldenummer: 11152736.2
(22) Anmeldetag: 31.01.2011
(51) Int. Cl.: C08G 18/48, C08G 18/36, B32B 27/40, H02G 15/10, H02G 15/113, C08G 18/76, C08G 18/80, H02G 15/00, H02G 15/013, C08G 18/66, C08G 101/00

(54) **Kabelverbinder auf der Basis von elastischen Polymer-Schaumstoff-Gel-Verbunden mit einstellbarem Anpressdruck**
Cable connector on the basis of elastic polymer-foam-gel compounds with adjustable contact pressure
Connecteur de câble à base de composites de gel-caoutchouc-polymère ayant une pression de compression réglable

(43) Veröffentlichungstag der Anmeldung: 01.08.2012
(73) Patentinhaber: GT Elektrotechnische Produkte GmbH, 79761 Waldshut-Tiengen (DE)
(72) Erfinder: Paulmann, Uwe, 79790 Küssaberg (DE)
(74) Vertreter: Gulde Hengelhaupt Ziebig & Schneider

(56) Entgegenhaltungen:
- EP-A1- 1 421 878
- EP-A2- 1 103 371
- WO-A1-97/03481
- DE-A1-102008 008 034
- US-A- 4 718 678

## Beschreibung

Diese Erfindung betrifft neuartige Kabelverbinder mit elastischen Verbunden aus einem polymeren Schaumstoff einschließlich zelligem Elastomeren und halbhartem Schaumstoff und einem polymeren, im wesentlichen wasser- und weichmacherfreien Gel. Insbesondere betrifft diese Erfindung solche Kabelverbinder, die Verbunde aus einem elastischen bis halbharten Polyurethan-Schaumstoff und einem Polyurethangel ohne erkennbare Grenzschicht für elektrische Leitungsverbindungen mit hoher Durchschlagspannung enthalten, die über einen variablen und varierbaren Anpressdruck verfügen sollen.

Verbindungen für elektrische Leitungen (Kabel) bzw. Kabeln und elektrischen Geräten bzw. Vorrichtungen sind bekannt und werden z. B. in der DE 694 11 937 T2 beschrieben. Danach besteht bei Verwendung von Gelen in Kabelverbindern ein Problem in der Grenzfläche zwischen zwei Gelmassen, ein weiteres in Lufteinschlüssen zwischen den zusammenzufügenden Massen und ein drittes in inhärenten Eigenschaften des Gels oder einem Zusatzstoffe, z. B. Weichmacher oder Öl, die die Durchschlagspannung herabsenken oder mit den Kabelisolationen in Wechselwirkung treten und so die elektrischen Eigenschaften des Gesamtsystems negativ beeinflussen. Als Gele werden nach der Lehre der DE 69411937 T2 Polyurethangele mit 30 bis 70 % eines pflanzlichen Öls oder eines Weichmachers, Silikongele oder Triblockcopolymere wie SEBS eingesetzt. Bevorzugt werden Silikongele eingesetzt, um eine Verringerung der Durchschlagspannung an der Grenzfläche zu minimieren, die bis zu 20 kV/mm betragen kann.

Weiterhin werden nach DE-PS 199 57 397C (EP 1 103 371 A2, US 7,576,137 B2) Polyurethangele als Verbunde mit viskoelastischen Schaumstoffen für Sitze oder als Sitzkissen beschrieben, bei denen das Gel aus einem oder mehreren Polyolen mit Hydroxylzahlen unter 112 mg KOH/g und einem oder mehreren Polyolen mit Hydroxylzahlen im Bereich von 112 bis 600 mg KOH/g bei einem Gewichtsverhältnis der Komponenten zwischen 90 : 10 und 10 : 90 sowie ggf. bekannter Füll- und Zusatzstoffe mit einem beträchtlichen Unterschuss an Isocyanaten (Isocyanatindex 20 bis 60) hergestellt wird. Eine weitere technische Lehre zur Herstellung von Polyurethan-Gelen wird in der DE 10 2008 008 034 A1 beschrieben, wonach der Isocyanat-Index nahe 1 liegt und dadurch eine größere Zahl freier Hydroxylgruppen (die eine höhere Leitfähigkeit verursachen) vermieden wird.

Die Herstellung von polymeren Schaumstoffen einschließlich zelligen Elastomeren und halbharten Schaumstoffen, insbesondere auf der Basis von Polyurethanen, ist bekannt. Ihre Formulierung und Herstellung wird z. B. in Kunststoff-Handbuch, Bd. VII, Vieweg/Höchtlen, Polyurethane, München 1966, High Polymers Vol. XVI, Polyurethanes, Chemistry and Technology, J. W. Saunders & K. C. Frisch, Interscience Publishers, New York, 192, oder Becker/Braun, Polyurethan-Handbuch beschrieben.

Nach der Lehre der DE 10 2004 048 154 A1 können zwei Räume gegeneinander flüssigkeits- und gasdicht abgedichtet werden, wenn der dichtende Körper als Gel und einer damit verbundenen Haut ausgebildet wird. Weiterhin wird in der DE 20 2007 002 809 U1 ein Kombinationswerkstoff aus mindestens zwei Werkstoffen beschrieben, bei denen ein Werkstoff ein Kautschukmaterial und das zweite ein Gel ist, die an einer Kontaktoberfläche eine innige Verbindung eingehen. Nach der DE 198 05 022 A1 besteht eine weitere technische Lösung in Abdichtungssystemen für Bauwerke gegenüber Witterungseinflüssen, die aus hydrophilen Polyurethan-Prepolymeren und sich unter Einfluss von Wasser verfestigenden Bestandteilen bestehen.

Nach der US 2007/0055330 A1 ist eine Sandwich-Konstruktion aus zwei elastomeren Schichten und einer zwischen ihnen angeordneten Heizvorrichtung bekannt.

US 4,718,678 offenbart ein Verfahren zur Abdichtung von Kabeln, wobei ein Formkörper mit einem Schaumstoff und einem Gel gefüllt ist. Das Dokument offenbart aber kein Polyurethanschaumstoff.

Die bisher bekannten technischen Lösungen weisen auf die vielfältigen Probleme der Isolation von elektrischen Leitungen bei ihrem Zusammenfügen der der daran anschließenden erforderlichen Isolation hin. Diese Probleme wurden bereits weiter oben dargestellt. Bei der Verwendung ausschließlich von Harzen besteht das Problem darin, dass die Kabelgarnitur nicht wieder geöffnet werden kann und nur unter Zerstörung des Isolationsmaterials und/oder der Hülle die Kabel wieder frei gelegt werden können. Bei Verwendung von Gelen bestehen Probleme in Bezug auf Grenzfläche und Lufteinschlüsse, da die Teile der Isolation nahtlos und luftblasenfrei zusammengefügt werden müssen. Das bedeutet, dass bei der Zwei-Schalen-Technik die Menge an Gel in beiden Hälften sehr sorgfältig eingestellt werden muss, damit weder zu wenig Gel in der zusammenfügten Garnitur noch zu viel, da dieses entfernt werden muss, enthalten ist. Außerdem muss die Gelmenge so eingestellt werden, dass ein hinreichender Anpressdruck erhalten wird, dass weder Luftblasen eingeschlossen werden noch die Grenzfläche Defekte aufweist.

Aufgabe der Erfindung ist es, einen Kabelverbinder zur Verfügung zu stellen, mit dem die Probleme des Anpressdruckes nicht bestehen und dieser durch den Aufbau mit elastischen Polymer-Schaumstoff-Gel-Verbunden reguliert werden kann.

Erfindungsgemäß wird die Aufgabe dadurch gelöst, dass in einem offenen Formkörper zunächst eine Schicht aus frei aufschäumendem elastischen bis halbharten Polyurethan-Schaumstoff hergestellt und auf diese eine Gelschicht ebenfalls aus einem Polyurethan-System derart aufgebracht wird, dass beide Schichten sich zumindest in der Oberfläche durchdringen und damit einen unlösbaren Verbund ergeben.

Es wurde überraschend gefunden, dass die oben genannten Probleme der Verfüllung von insbesondere größeren Kabelverbindungen mit isolierenden Kunststoffmaterialien wie Silikongelen oder Polyurethanharzen oder -gelen beseitigt werden, wenn zunächst ein elastisches Material eingebracht wird, mit dem der Anpressdruck automatisch derart gesteuert wird, dass eine kohärente Grenzfläche entsteht und keine Luftblasen eingeschlossen werden können.

Da es sich hierbei um Verbindungen elektrischer Kabel handelt, kommt der Zusammensetzung der eingesetzten Materialien hinsichtlich der Eigenschaften und des Erfolges zur Isolation eine große Bedeutung zu. Eine Reihe von Gelen ist beschrieben worden, jedoch ist es ein Erfordernis der erfindungsgemäßen Lösung des Problems, dass die verwendeten Materialien einerseits eine unlösbare Verbindung eingehen und andererseits durch ihre Zusammensetzung einen hohen elektrischen Durchgangswiderstand aufweisen. Diese Forderung wird z. B. durch die technische Lehre der DE 199 57 397 C1, nach der Polyurethangele als Verbunde mit viskoelastischen Schaumstoffen mit Isocyanatindices unter 70 hergestellt werden, nicht erfüllt. Auch Silikongele in Kombination mit Silikonschaumstoffen erfüllen diese Bedingung nicht, da bei dieser Kombination niedermolekulare Stoffe freigesetzt werden können, die zu einer deutlichen Reduzierung des elektrischen Durchgangswiderstandes führen.

Erfindungsgemäß werden für den Schaumstoff daher vorzugsweise elastische Polyurethan-Schaumstoff-Systeme eingesetzt, deren Dichte im Bereich von 20 bis 400 g/d³ und deren Shore-A-Härte im Bereich von 20 bis 90 liegt. Die Herstellung solcher Schaumstoffe ist bekannt; die Systeme können als Zwei- oder Mehrkomponenten-Systeme hergestellt werden. Sie sind in der Regel aufgebaut aus
a) einem oder mehreren Polyetheralkoholen der Molmasse 400 bis 8000,
b) ggf. einem oder mehreren Kettenverlängerern,
c) einem oder mehreren tertiären Aminen als Katalysatoren,
d) einer oder mehreren metallorganischen Verbindungen als Katalysatoren,
e) ggf. festen oder flüssigen Zusatzstoffen,
f) einem oder mehreren Treibmitteln, die physikalisch oder chemisch sein können,
g) einem oder mehreren Stabilisatoren,
h) einem oder mehreren Di- und/oder Polyisocyanaten.

Als Polyetheralkohole werden Gemische aus
aa) einem oder mehreren Polyethertriolen der Molmasse 400 bis 600 und
ab) einem oder mehreren Polyetheralkoholen der Molmasse 2000 bis 8000 der Funktionalität 2 bis 3
ac) einem oder mehreren Polyetherdiolen der Molmasse 200 bis 4000

### bevorzugt.

Als Kettenverlängerer werden Diole, Diamine, und/oder Dithiole eingesetzt, z. B. Ethylenglykol, Butan-1,4-diol, Hexan-1,6-diol, Octan-1,8-diol, 2-Ethyl-1,3-hexandiol, Ethylendiamin, N²-Methyl-dipropylentriamin, Xylylendiamin, 4,4'-Dicyclohexylmethandiamin, α ,ω-Diaminopolyether der Molmasse 400 bis 4000, Ethylenglykol-bis(thioglykolsäureester), Diethylenglykol-bis(thioglykolsäureester), Triethylenglykol-bis(thioglykolsäureester), Tetraethylenglykol-bis(thioglykolsäureester), Glycerin-1,3-bis(thioglykolsäureester) usw.

Als tertiäre Amine werden z. B. Bis-(dimethylaminoethyl)ether, Pentamethyldiethylentriamin, Dimorpholinodiethylether, Tris-(3-dimethylamino)propylamin, Pentamethylpropylentriamin, N-Methyldi-cyclohexylamin, N-Methylmorpholin, N,N'-Dimethylpiperazin, 1-Dimethylaminoethyl-4-methyl-piperazin eingesetzt.

Als metallorganische Verbindungen als Katalysatoren werden z. B. Wismut- oder Bleiverbindungen wie die Carboxylate, z. B. Wismuttriacetat, Wismuttrioleat, Wismutsubsalizylat oder Wismutbis-neodecanoat sowie spezielle Zinnverbindungen, insbesondere solche, die thermisch aktivierbar sind, z. B. Dibutylzinnbis(2-ethyl-hexyl-thioglykolat) eingesetzt.

Als Treibmittel werden vorzugsweise leichtsiedende Kohlenwasserstoffe oder halogenierte Kohlenwasserstoffe, z. B. Pentan, Cyclopentan, Dichlormethan, Difluorethan, Trifluorethan, Tetrafluorethan, Trifluormethan usw. oder Gemische davon eingesetzt. Geeignete physikalische Treibmittel sind in der Polyurethan-Chemie bekannt und werden unter HFC-Bezeichnungen, z. B. HFC 134a, HFC 141b, HFC 365 mfc, HFC 22, HFC 245fa usw. vertrieben. Bevorzugt wird das HFC 245fa (1,1,1,3,3-Pentafluorpropan).

Als Stabilisatoren werden vorzugsweise in der Polyurethan-Chemie bekannte Silikonstabilisatoren, d. h. Polyether mit endständigen Siloxangruppen, verwendet, vorzugsweise Typen, die zu offenzelligen Schaumstoffen in Abwesenheit von Wasser führen.

Als Di- und/oder Polyisocyanate kommen die technisch in großen Mengen verfügbaren Di- und/oder Polyisocyanate wie Toluylendiisocyanat (als 2,4- oder 2,6-Isomeres oder als Isomerengemisch), Diphenylmethandiisocyanat (hauptsächlich das 4,4'-Isomere, aber auch das 2,2'- oder 2,4'-Isomere oder Gemische davon), polymeres Diphenylmethandiisocyanat (p-MDI), Xylylendiisocyanat usw in Frage. Außerdem können aliphatische, cycloaliphatische und/oder araliphatische Diisocyanate eingesetzt werden, insbesondere 4,4'-Dicyclohexylmethandiisocyanat. Weiterhin können Vorpolymerisate aus einem oder mehreren dieser Isocyanate und Diolen, Triolen, Tetrolen, Diaminen, Triaminen, Polyaminen, Polyethern mit endständigen Aminogruppen, Thiolen und/oder Aminoalkoholen eingesetzt werden. Von dieser Gruppe werden Vorpolymerisate (Prepolymere) auf der Basis von Toluylendiisocyanat und einem Diol-Triol-Gemisch bevorzugt.

Als feste oder flüssige Zusatzstoffe können Pigmente, anorganische und organische inerte Stoffe, feste Flammschutzmittel wie Melamin, Melamincyanurat, Melaminphosphat, Melaminpolyphosphat, Ammoniumpolyphosphat I und/oder II, Aluminiumoxidhydrat, Magnesiumoxid, Magnesiumhydroxid, die Leitfähigkeit beeinflussende Stoffe wie Graphit, Graphen, Indium-Zink-Mischoxide, die Wärmeleitfähigkeit beeinflussende Stoffe wie Siliciumcarbid, oder nanoskalige Materialien wie ggf. oberflächenbehandelte Graphene, Aluminiumoxide, Aluminiumoxidhydroxid, Zink-Indium-Mischoxid usw. eingesetzt werden.

Erfindungsgemäß werden für das Gel Polyurethangele Systeme aus
(a) einem oder mehreren, überwiegend aus auf ein Startermolekül der Hydroxylfunktionalität zwischen 2 und 3 addierten Propylenoxid hergestellten Polyetheralkohol der Hydroxylzahl 28 bis 90 mg KOH/g,
(b) einem oder mehreren, überwiegend aus auf ein Startermolekül der Hydroxylfunktionalität zwischen 2 und 4 addierten Propylenoxid hergestellten Polyetheralkohol der Hydroxylzahl 102 bis 500 mg KOH/g,
(c) einem oder mehreren Katalysatoren für die Polyurethanbildung,
(d) ggf. einem Zusatzstoff mit einer Teilchengröße im Bereich von 1 bis 650 nm,
(e) einem oder mehreren Diisocyanaten und
(f) ggf. einem oder mehreren Triisocyanaten,

### eingesetzt.

Die Polyurethangele basieren auf einem Netzwerk, das sowohl in der Weichsegmentphase als auch in der Hartsegmentphase vernetzt ist und zusätzlich in der Weichsegmentphase aus zwei Netzwerken wesentlich unterschiedlicher Netzkettenabstände (charakterisiert durch die mittlere Molmasse zwischen den Netzwerkknoten) aus einem im wesentlichen einheitlich aufgebauten Polyetheralkoholgemisch mit dem hydrophoberen Strukturelement Propylenglykol sowie einer Vernetzung im Hartsegment über Triisocyanate besteht.

Als Triisocyanate werden polymeres 4,4'-Diphenylmethan-diisocyanat (p-MDI) oder Trimerisate aus Gemischen von aliphatischen, cycloaliphatischen und/oder araliphatischen Diisocyanaten sowie mindestens einem aromatischen Diisocyanat in Gegenwart bestimmter Katalysatoren verwendet, wobei der Anteil an aromatischem Diisocyanat das Ausmaß der Trimerisierung des Isocyanatgemisches und damit den Grad der Vernetzung (Vernetzungsdichte) im Hartsegment bestimmt.

Das Verhältnis des Polyetheralkohls (a) zum Polyetheralkohol (b) bestimmt die Härte und Elastizität des Polyurethangels, das Verhältnis der Polyetheralkohole (a+b) : (c) die Weichheit und damit die Anpressfähigkeit des Gels. Dieses Verhältnis liegt zwischen (a) : (b) wie 97 : 3 bis 65 : 35, das Verhältnis von (a + b) : (c) zwischen 50 : 50 bis 97 : 3.

Das stöchiometrische Verhältnis von Hydroxylgruppen zu Isocyanatgruppen beträgt 0,95 bis über 1, was bei Polyurethangelen für die Elektrotechnik wegen des geforderten Durchgangswiderstandes und der für den Mittelspannungsbereich erforderlichen Durchschlagspannung von Bedeutung ist, da die freien Hydroxylgruppen wesentlich zur Leitfähigkeit des Materials beitragen.

Erfindungsgemäß werden die beiden Systeme zur Herstellung des Verbundes derart kombiniert, dass ihre jeweilige Bildungsreaktion noch nicht vollständig abgeschlossen ist. Bevorzugt wird ein Umsatzgrad der Systeme von 40 bis 95 %, besonders bevorzugt von 60 bis 95 %.

Die Herstellung der Systeme erfolgt demzufolge derart, dass zunächst das zur Bildung des elastischen Polyurethan-Schaumstoffs eingesetzte System in einem offenen Formkörper derart gegeben wird, dass der Schaumbildungsprozess innerhalb von 3 bis 30 s beginnt und bei freier Verschäumung (d. h. ohne Verschließen des Formkörpers und ohne Druck) innerhalb von 30 bis 900 s abgeschlossen ist, und dass das Gel-System auf die sich bildende Schaumschicht nach 5 s bis 30 Minuten aufgetragen und die Komponenten miteinander umgesetzt werden. Zur Herausbildung des Verbundes ist es erfindungsgemäß erforderlich, dass die sich bildende Schaumschicht auf der Oberfläche noch eine Mindestzahl von freien Hydroxyl- und/oder Isocyanatgruppen aufweist, mit der eine Isocyanat- oder Hydroxylgruppe der Gelschicht reagieren kann, so dass der Verbund chemisch verbunden und damit nur unter Zerstörung trennbar ist.

Die Herstellung des Verbundes erfolgt bevorzugt dadurch, dass
a) ein erstes System bestehend aus
   a1) einem oder mehreren Polyetheralkoholen der Molmasse 400 bis 8000,
   a2) ggf. einem oder mehreren Kettenverlängerern,
   a3) einem oder mehreren tertiären Aminen als Katalysatoren,
   a4) einer oder mehreren metallorganischen Verbindungen als Katalysatoren,
   a5) ggf. festen oder flüssigen Zusatzstoffen,
   a6) einem oder mehreren Treibmitteln, die physikalisch oder chemisch sein können,
   a7) einem oder mehreren Stabilisatoren,
   a8) einem oder mehreren Di- und/oder Polyisocyanaten unter Aufschäumen in einen Formkörper gegeben wird und innerhalb von 5 s bis 30 min auf das noch nicht ausreagierte System
b) ein zweites gelbildendes System bestehend aus
   b1) einem oder mehreren, überwiegend aus auf ein Startermolekül der Hydroxylfunktionalität zwischen 2 und 3 addierten Propylenoxid hergestellten Polyetheralkohol der Hydroxylzahl 28 bis 90 mg KOH/g,
   b2) einem oder mehreren, überwiegend aus auf ein Startermolekül der Hydroxylfunktionalität zwischen 2 und 4 addierten Propylenoxid hergestellten Polyetheralkohol der Hydroxylzahl 102 bis 500 mg KOH/g,
   b3) einem oder mehreren Katalysatoren für die Polyurethanbildung,
   b4) einem oder mehreren Di- und/oder Triisocyanaten und
   b5) ggf. einem Zusatzstoff mit einer Teilchengröße im Bereich von 1 bis 650 nm
   unter fortgesetzter Umsetzung des Schaumsystems und Umsetzung des Gelsystems unter Ausbildung einer mechanisch nicht unter Zerstörung trennbaren Grenzschicht in dem Formkörper ausgehärtet wird.

Mittels des erfindungsgemäßen Verfahrens werden Verbunde in Formkörpern hergestellt, bei denen in das nicht leitfähige Gel mit einer Durchschlagspannung von 20 bis 150 kV/mm die elektrischen Leitungen gelegt und das System durch Zusammenpressen mit einem Gegenformkörper verschlossen werden, wobei die Härte des Schaumstoffs den Anpressdruck bestimmt. Die Härte des Schaumstoffs wird demzufolge durch die Größe des Formkörpers und die Härte des Gels bestimmt.

Die Füllung des Formkörpers kann zwischen 15 und 90 % mit dem Schaumstoff und mit 85 bis 10 % mit dem Gel erfolgen. Bevorzugt wird ein Verhältnis von 20 bis 80 % Schaumstoff und mit 80 bis 20 % Gel.

Die Herstellung der Schichten erfolgt durch Vermischung der Komponenten des jeweiligen Systems. Die Mischtechnik kann dabei manuell sein (Handmischtechnik) oder maschinell mit Zwei- oder Mehrkomponenten-Maschinen. In einer Variante der Herstellung der erfindungsgemäßen Verbunde werden zwei Zwei-Komponenten-Maschinen eingesetzt, von denen jede eines der Systeme verarbeiten kann. Die Mischköpfe der beiden Maschinen werden so kombiniert, dass der eine Mischkopf über das Formteil hinweg geführt wird, so dass das Schaumsystem in den Formkörper eingetragen wird, und der zweite Mischkopf im Abstand von 10 bis 50 cm dem ersten nachgeführt wird und mit diesem das Gelsystem auf das reagierende Schaumsystem aufgetragen wird. Durch die Wahl des Abstandes und die Führungsgeschwindigkeit kann die Aufeinanderfolge des Auftragens beider Systeme exakt eingestellt werden.

Weiterhin ist ein manuelles Arbeiten möglich. Dazu werden die Bestandteile der Komponente A des Schaum-Systems (a bis g) vorgemischt und mit der Komponente B, der Isocyanatkomponente vermischt und in den Formkörper eingetragen. Diese Mischung kann offen in Gefäßen oder geschlossen in Beuteln oder Kammern erfolgen. Sobald das Schaumsystem in den Formkörper eingetragen worden ist, werden die Komponenten des Gel-Systems ebenso in Form einer A-Komponente aus den Bestandteilen a bis d sowie dem/den Di- und/oder Triisocyanaten hergestellt. Auch hier können offene Gefäße oder geschlossene Beutel oder Kammern verwendet werden.

Man erhält erfindungsgemäß Verbunde in Formkörpern, die als Verbindungen für elektrische Leitungen (Kabel) verwendet werden und die im Bereich der Nieder-, Mittel- und Hochspannung bis zu 50 kV eingesetzt werden können. Weiterhin können die erfindungsgemäßen Verbunde eingesetzt werden, um Kabel an elektrischen Geräten zu fixieren und zu isolieren.

Der Vorteil der erfindungsgemäßen Verbunde besteht in ihrer geringeren Dichte und damit in ihrem geringeren Materialaufwand gegenüber herkömmlichen oder nach dem Stand der Technik bekannten Produkten, in einer kohärenten, fehlerfreien Grenzschicht mit einer der Masse des Verbundes sehr ähnlichen Durchschlagspannung und der vollständigen Umhüllung der Leiter, die aus dem ausgehärteten Gel problemlos wieder frei gelegt werden können.

### Zusammenfassend ist festzustellen, dass

erfindungsgemäß Kabelverbinder mit reguliertem Anpressdruck aus elastischen Polymer-Schaumstoff-Gel-Verbunden bereitgestellt werden, die dadurch gekennzeichnet sind, dass in zwei Hälften eines offenen Formkörpers zunächst eine Schicht aus frei aufschäumendem elastischen bis halbharten Polyurethan-Schaumstoff hergestellt wird. Auf diese wird eine Gelschicht ebenfalls aus einem Polyurethan-System derart aufgebracht,
dass in die Gelschicht von beiden Seiten des Formkörpers entisolierte Kabelenden eingeführt und diese miteinander verbunden werden,
dass die verbundenen Kabelenden vollständig vom Gel umhüllt werden und
dass die beiden Hälften des Formkörpers derart zusammengefügt werden, dass sich die beiden Gelschichten oberflächlich zwischen 1 nm und 2,5 µm durchdringen und bei der Zusammenfügung an den Schichten einen unlösbaren Verbund ergeben,
wobei durch den Vorgang des Verschließens ein Anpressdruck auf die Gelschichten ausgeübt wird, so dass diese nachgeben und dieses Nachgeben in Form eines Druckes auf die Schaumschicht übertragen, wodurch ein optimal gefüllter Formkörper hergestellt wird.

Die Polyurethan-Systeme weisen bevorzugt einen Isocyanatindex zwischen 0,9 und 1,5 auf. Beim Zusammenfügen wird vorzugsweise eine kohärente Grenzfläche zwischen den Polyurethansystemen einerseits und zwischen den Geloberflächen gebildet.

In einer bevorzugten Ausführungsvariante ist der Kabelverbinder dadurch gekennzeichnet, dass bei der Überschichtung des Schaumsystems mit dem Gelsystem der Umsatzgrad, bedingt durch den Reaktionsverlauf nach der Vermischung in Abhängigkeit von Temperatur der Komponenten und der Katalyse der Systeme, 40 bis 95 % beträgt.

Vorzugsweise beträgt bei der Überschichtung des Schaumsystems mit dem Gelsystem der Umsatzgrad, gesteuert durch den zeitlichen Versatz der Aufbringung der Systeme, 60 bis 95 %.

Die bevorzugte Durchschlagspannung des isolierenden Systems beträgt 20 bis 180 kV/mm, der durch den vergleichsweise hohen Isocyanatindex zwischen 0,9 und 1,5 erreicht wird.

### Ausführungsbeispiele

In den Beispielen werden folgende Stoffe eingesetzt:
Polypropylenglykol der Molmasse 2000 (PPG 2000)
Polyoxypropylentriol durch anionische Polymerisation von Propylenoxid auf Glycerin der Molmasse 3000 (Hydroxylzahl 55 mg KOH/g) (GP3000)
Polyoxypropylentriol durch anionische Polymerisation von Propylenoxid auf Glycerin der Molmasse 400 (Hydroxylzahl 420 mg KOH/g) (GP400)
Dipropylenglykol (DPG)
Aminpolyether auf der Basis Dipropylentriamin und Propylenoxid mit der Hydroxylzahl 430 mg KOH/g (AP600)
Polymeres 4,4'-Diphenylmethandiisocyanat (p-MDI) Lupranat® M20S der BASF AG

Ein Vorpolymerisat aus 4,2 Äquivalenten Toluylendiisocyanat (80 % 2,4-Isomeres, 20 % 2,6-Isomeres), 1 Äquivalent GP 400 und 1 Äquivalent Polyethylenglykol der Molmasse 600 (PEG 600) mit einem Isocyanatgehalt von 11,5 % (PP1)

Ein Vorpolymerisat aus 43 TI. 4,4'-Diphenylmethandiisocyanat, 5 TI. Dipropylenglykol, 52 TI. p-MDI (PP2)

Ein Vorpolymerisat aus 89,5 TI. 4,4'-Diphenylmethandiisocyanat, 9,5 TI. Dipropylenglykol und 1 TI. Triethylphosphat (PP3)

Weitere Bestandteile werden in den Beispielen erläutert.

### Beispiel 1

Eine A-Komponente für das Schaumsystem wird hergestellt aus (Komponente A-S1)
65 Teile (Gew.%) GP 3000
12 Teile (Gew.%) GP 400
4 Teile (Gew.%) AP 600
4 Teile (Gew.%) Ethylenglykol
9 Teile (Gew.%) HFC 245 fa
4,5 Teile (Gew.%) synthetisches Natriumaluminiumsilikat
0,5 Teile (Gew.%) DC 5169
1 Teil (Gew.%) Tetramethylbiguanid
Als B-Komponente wird das Isocyanat PP3 verwendet.
Eine A-Komponente für das Gelsystem wird hergestellt aus (Komponente A-G1)
95,3 Teile (Gew.%) PPG2000
2,6 Teile (Gew.%) DPG
2,0 Teile (Gew.%) Stabaxol I
0,1 Teile (Gew.%) Dibutylzinn-bis(2-ethylhexylthioglykolat)

Als B-Komponente wird (p-MDI) Lupranat® M20S im Mischungsverhältnis A : B wie 1 : 0,15 verwendet.

Die A-Komponente A-S1 wird in einen Vorratsbehälter einer Hilger & Kern Mischmaschine mit statischem Mischer, die B-Komponente PP3 wird in den zweiten Vorratsbehälter gefüllt. Nach Beschleierung mit Stickstoff werden beide Behälter auf 42°C erwärmt.

Die A-Komponente A-G1 wird in einen Vorratsbehälter einer zweiten Hilger & Kern Mischmaschine mit statischem Mischer, die B-Komponente p-MDI wird in den zweiten Vorratsbehälter gefüllt. Nach Beschleierung mit Stickstoff werden beide Behälter auf 52°C erwärmt.

Eine aus Polypropylen gefertigte Zwei-Schalen-Kabelmuffe mit 250 ml Inhalt wird auf 65°C erwärmt. Zunächst wird aus der Maschine 1 ein Schuss von jeweils 78 g in jede Halbschale eingegeben. Nach 35 s wird das aufschäumende System mit jeweils 45 g pro Halbschale überschichtet. Der Verbund wird anschließend 30 Minuten bei Umgebungstemperatur liegen gelassen. Danach werden blanke 10 kV-Kabel beidseitig eingefügt und verbunden. Die Halbschalen werden zusammengefügt und unter leichtem Druck verschlossen. Die Prüfung der Verbindung ergab bis 15 kV während der Prüfdauer von 1 Monat keinen Überschlag.

### Beispiel 2

Eine A-Komponente für das Schaumsystem wird hergestellt aus (Komponente A-S2)
72 Teile (Gew.%) GP 3000
4 Teile (Gew.%) GP 400
3 Teile (Gew.%) AP 600
5 Teile (Gew.%) Ethylenglykol
14 Teile (Gew.%) HFC 245 fa
0,5 Teile (Gew.%) synthetisches Natriumaluminiumsilikat
0,5 Teile (Gew.%) DC 5300
0,5 Teile (Gew.%) Tetramethylbiguanid
0,5 Teile (Gew.%) Zinndioctoat
Als B-Komponente wird das Isocyanat PP2 verwendet.
Eine A-Komponente für das Gelsystem wird hergestellt aus (Komponente A-G2)
97,1 Teile (Gew.%) PPG2000
2,8 Teile (Gew.%) DPG
0,1 Teile (Gew.%) Dibutylzinn-bis(2-ethylhexylthioglykolat)

Als B-Komponente wird (p-MDI) Lupranat® M20S im Mischungsverhältnis A : B wie 1 : 0,15 verwendet.

Die A-Komponente A-S2 wird in einen Vorratsbehälter einer Hilger & Kern Mischmaschine mit statischem Mischer, die B-Komponente PP2 wird in den zweiten Vorratsbehälter gefüllt. Nach Beschleierung mit Stickstoff werden beide Behälter auf 42°C erwärmt.

Die A-Komponente A-G2 wird in einen Vorratsbehälter einer zweiten Hilger & Kern Mischmaschine mit statischem Mischer, die B-Komponente p-MDI wird in den zweiten Vorratsbehälter gefüllt. Nach Beschleierung mit Stickstoff werden beide Behälter auf 52°C erwärmt.

Eine aus Polypropylen gefertigte Zwei-Schalen-Kabelmuffe mit 250 ml Inhalt wird auf 65°C erwärmt. Zunächst wird aus der Maschine 1 ein Schuss von jeweils 78 g in jede Halbschale eingegeben. Nach 35 s wird das aufschäumende System mit jeweils 45 g pro Halbschale überschichtet. Der Verbund wird anschließend 30 Minuten bei Umgebungstemperatur liegen gelassen. Danach werden blanke 10 kV-Kabel beidseitig eingefügt und verbunden. Die Halbschalen werden zusammengefügt und unter leichtem Druck verschlossen. Die Prüfung der Verbindung ergab bis 15 kV während der Prüfdauer von 1 Monat keinen Überschlag.

### Beispiel 3

Eine A-Komponente für das Schaumsystem wird hergestellt aus (Komponente A-S3)
71,0 Teile (Gew.%) GP 3000
4 Teile (Gew.%) GP 400
1,5 Teile (Gew.%) AP 600
7 Teile (Gew.%) Ethylenglykol
16 Teile (Gew.%) HFC 245 fa
0,6 Teile (Gew.%) DC 5043
0,7 Teile (Gew.%) Tetramethylbiguanid
0,2 Teile (Gew.%) Zinndioctoat
Als B-Komponente wird das Isocyanat PP2 verwendet.
Eine A-Komponente für das Gelsystem wird hergestellt aus (Komponente A-G3)
95,1 Teile (Gew.%) PPG2000
2,0 Teile (Gew.%) GP 3000
2,8 Teile (Gew.%) DPG
0,1 Teile (Gew.%) Dibutylzinn-bis(2-ethylhexylthioglykolat)

Als B-Komponente wird (p-MDI) Lupranat® M20S im Mischungsverhältnis A : B wie 1 : 0,15 verwendet.

Die A-Komponente A-S3 wird in einen Vorratsbehälter einer Hilger & Kern Mischmaschine mit statischem Mischer, die B-Komponente PP2 wird in den zweiten Vorratsbehälter gefüllt. Nach Beschleierung mit Stickstoff werden beide Behälter auf 42°C erwärmt.

Die A-Komponente A-G3 wird in einen Vorratsbehälter einer zweiten Hilger & Kern Mischmaschine mit statischem Mischer, die B-Komponente p-MDI wird in den zweiten Vorratsbehälter gefüllt. Nach Beschleierung mit Stickstoff werden beide Behälter auf 50°C erwärmt.

Eine aus Polypropylen gefertigte Zwei-Schalen-Kabelmuffe mit 250 ml Inhalt wird auf 50°C erwärmt. Zunächst wird aus der Maschine 1 ein Schuss von jeweils 78 g in jede Halbschale eingegeben. Nach 35 s wird das aufschäumende System mit jeweils 45 g pro Halbschale überschichtet. Der Verbund wird anschließend 30 Minuten bei Umgebungstemperatur liegen gelassen. Danach werden blanke 10 kV-Kabel beidseitig eingefügt und verbunden. Die Halbschalen werden zusammengefügt und unter leichtem Druck verschlossen. Die Prüfung der Verbindung ergab bis 15 kV während der Prüfdauer von 1 Monat keinen Überschlag.

## Patentansprüche

1. Kabelverbinder aus elastischen Polymer-Schaumstoff-Gel-Verbunden, **dadurch gekennzeichnet, dass** in zwei Hälften eines offenen Formkörpers jeweils zunächst eine Schicht aus frei aufschäumendem elastischen bis halbharten Polyurethan-Schaumstoff hergestellt und auf diese eine Gelschicht ebenfalls aus einem Polyurethan-System derart aufgebracht ist,
dass in die Gelschicht von beiden Seiten des Formkörpers entisolierte Kabelenden eingeführt und diese miteinander verbunden sind,
dass die verbundenen Kabelenden vollständig vom Gel umhüllt sind und
dass die beiden Hälften des Formkörpers derart zusammengefügt sind, dass sich die beiden Gelschichten oberflächlich zwischen 1 nm und 2,5 µm durchdringen und bei der Zusammenfügung an den Schichten einen unlösbaren Verbund ergeben,
wobei durch den Vorgang des Verschließens ein Anpressdruck auf die Gelschichten ausgeübt ist, so dass diese nachgeben und dieses Nachgeben in Form eines Druckes auf die Schaumschicht übertragen, wodurch ein gefüllter Formkörper hergestellt ist.

2. Kabelverbinder nach Anspruch 1, **dadurch gekennzeichnet, dass** die Polyurethan-Systeme einen Isocyanatindex zwischen 0,9 und 1,5 aufweisen.

3. Kabelverbinder nach Anspruch 1 oder 2, **dadurch gekennzeichnet, dass** jeweils eine kohärente Grenzfläche zwischen den Polyurethansystemen einerseits und zwischen den Geloberflächen beim Zusammenfügen besteht.

4. Kabelverbinder nach einem der Ansprüche 1 bis 3, **dadurch gekennzeichnet, dass** die Durchschlagspannung des isolierenden Systems 20 bis 180 kV/mm beträgt.

5. Kabelverbinder nach einem der Ansprüche 1 bis 4, **dadurch gekennzeichnet, dass** die Schaumsysteme aufgebaut sind aus
(a) einem oder mehreren Polyetheralkoholen der Molmasse 400 bis 8000,
(b) ggf. einem oder mehreren Kettenverlängerern,
(c) einem oder mehreren tertiären Aminen als Katalysatoren,
(d) einer oder mehreren metallorganischen Verbindungen als Katalysatoren,
(e) ggf. festen oder flüssigen Zusätzstoffen,
(f) einem oder mehreren Treibmitteln, die physikalisch oder chemisch sein können,
(g) einem oder mehreren Stabilisatoren,
(h) einem oder mehreren Di- und/oder Polyisocyanaten.

6. Kabelverbinder nach einem der Ansprüche 1 bis 5, **dadurch gekennzeichnet, dass** die Polyurethangel-Systeme bestehen aus
(a) einem oder mehreren, überwiegend aus auf ein Startermolekül der Hydroxylfunktionalität zwischen 2 und 3 addierten Propylenoxid hergestellten Polyetheralkohol der Hydroxylzahl 28 bis 90 mg KOH/g,
(b) einem oder mehreren, überwiegend aus auf ein Startermolekül der Hydroxylfunktionalität zwischen 2 und 4 addierten Propylenoxid hergestellten Polyetheralkohol der Hydroxylzahl 102 bis 500 mg KOH/g,
(c) einem oder mehreren Katalysatoren für die Polyurethanbildung,
(d) ggf. einem Zusatzstoff mit einer Teilchengröße im Bereich von 1 bis 650 nm,
(e) einem oder mehreren Diisocyanaten und
(f) ggf. einem oder mehreren Triisocyanaten.

7. Verfahren zur Herstellung eines Kabelverbinders gemäß einem der Ansprüche 1 bis 6, **dadurch gekennzeichnet, dass**
a) ein erstes schaumbildendes System bestehend aus
a1) einem oder mehreren Polyetheralkoholen der Molmasse 400 bis 8000,
a2) ggf. einem oder mehreren Kettenverlängerern,
a3) einem oder mehreren tertiären Aminen als Katalysatoren,
a4) einer oder mehreren metallorganischen Verbindungen als Katalysatoren,
a5) ggf. festen oder flüssigen Zusatzstoffen,
a6) einem oder mehreren Treibmitteln, die physikalisch oder chemisch sein können,
a7) einem oder mehreren Stabilisatoren,
a8) einem oder mehreren Di- und/oder Polyisocyanaten
unter Aufschäumen in die offenen Hälften des Formkörpers gegeben wird und innerhalb von 5 s bis 30 min auf das noch nicht ausreagierte System
b) ein zweites gelbildendes System bestehend aus
b1) einem oder mehreren, überwiegend, aus auf ein Startermolekül der Hydroxylfunktionalität zwischen 2 und 3 addierten Propylenoxid hergestellten Polyetheralkohol der Hydroxylzahl 28 bis 90 mg KOH/g,
b2) einem oder mehreren, überwiegend aus auf ein Startermofekül der Hydroxylfunktionalität zwischen 2 und 4 addierten Propylenoxid hergestellten Polyetheralkohol der Hydroxylzahl 102 bis 500 mg KOH/g,
b3) einem oder mehreren Katalysatoren für die Polyurethanbildung,
b4) einem oder mehreren Di- und/oder Triisocyanaten und
b5) ggf. einem Zusatzstoff mit einer Teilchengröße im Bereich von 1 bis 650 nm
unter fortgesetzter Umsetzung des Schaumsystems und Umsetzung des Gelsystems unter Ausbildung einer mechanisch nicht unter Zerstörung trennbaren Grenzschicht in den Hälften des Formkörpers ausgehärtet wird.

8. Verfahren nach Anspruch 7, **dadurch gekennzeichnet, dass** bei der Überschichtung des Schaumsystems mit dem Gelsystem der Umsatzgrad, bedingt durch den Reaktionsverlauf nach der Vermischung in Ahängigkeit von Temperatur der Komponenten und der Katalyse der Systeme, 40 bis 95 % eingestellt wird.

9. Verfahren nach einem der Ansprüche 7 oder 8, **dadurch gekennzeichnet, dass** bei der Überschichtung des Schaumsystems mit dem Gelsystem der Umsatzgrad, gesteuert durch den zeitlichen Versatz der Aufbringung der Systeme, 60 bis 95 % eingestellt wird.

## Claims

1. Cable connectors made of elastic polymer gel foam composites, **characterized in that** a layer of freely foaming elastic to semi-hard polyurethane foam material is initially produced in each of two halves of an open mould and a gel layer made of a polyurethane system is likewise applied to this in such a manner that
cable ends stripped of insulation are introduced into the gel layer on both sides of the mould and connected to one another,
the connected cable ends are completely surrounded by gel and
the two halves of the mould are joined together in such a manner that the two gel layers penetrate one another superficially by between 1 nm and 2.5 µm and produce an inseparable composite at the layers during joining,
wherein the closing process causes pressure to be exerted on the gel layers, so that they yield and this yielding is transferred to the foam layer in the form of pressure, as a result of which a filled mould is produced.

2. The cable connectors according to claim 1, **characterized in that** the polyurethane systems have an isocyanate index of between 0.9 and 1.5.

3. The cable connectors according to claim 1 or 2, **characterized in that** each connector comprises a coherent interface between the polyurethane systems on the one hand and the gel surfaces when joined.

4. The cable connectors according to one of the claims 1 to 3, **characterized in that** the disruptive discharge voltage of the insulating system is 20 to 180 kV/mm.

5. The cable connectors according to one of the claims 1 to 4, **characterized in that** the foam systems are made up of
(a) one or a plurality of polyether alcohols with a molecular weight of 400 to 8000,
(b) one or a plurality of chain extenders where appropriate,
(c) one or a plurality of tertiary amines as catalysts,
(d) one or a plurality of organometallic compounds as catalysts,
(e) solid or liquid additives where appropriate,
(f) one or a plurality of propellants which may be physical or chemical,
(g) one or a plurality of stabilisers,
(h) one or a plurality of di- and/or polyisocyanates.

6. The cable connectors according to one of the claims 1 to 5, **characterized in that** the polyurethane gel systems comprise
(a) one or a plurality of polyether alcohol(s) with a hydroxyl number of 28 to 90 mg KOH/g mainly produced from propylene oxide added to a starter molecule with a hydroxyl functionality between 2 and 3,
(b) one or a plurality of polyether alcohol(s) with a hydroxyl number of 102 to 500 mg KOH/g mainly produced from propylene oxide added to a starter molecule with a hydroxyl functionality between 2 and 4,
(c) one or a plurality of catalysts for polyurethane formation,
(d) an additive with a particle size in the region of 1 to 650 nm where appropriate,
(e) one or a plurality of diisocyanates and
(f) one or a plurality of triisocyanates where appropriate.

7. A method of producing a cable connector according to one of the claims 1 to 6, **characterized in that**
a) a first foam-forming system comprising
a1) one or a plurality of polyether alcohols with a molecular weight of 400 to 8000,
a2) one or a plurality of chain extenders where appropriate,
a3) one or a plurality of tertiary amines as catalysts,
a4) one or a plurality of organometallic compounds as catalysts,
a5) solid or liquid additives where appropriate,
a6) one or a plurality of propellants which may be physical or chemical,
a7) one or a plurality of stabilisers,
a8) one or a plurality of di- and/or polyisocyanates
is added to the open halves of the mould with foaming and within 5 secs to 30 mins on the as yet unreacted system
b) a second gel-forming system comprising
b1) one or a plurality of polyether alcohol(s) with a hydroxyl number of 28 to 90 mg KOH/g mainly produced from propylene oxide added to a starter molecule with a hydroxyl functionality between 2 and 3,
b2) one or a plurality of polyether alcohol(s) with a hydroxyl number of 102 to 500 mg KOH/g mainly produced from propylene oxide added to a starter molecule with a hydroxyl functionality between 2 and 4,
b3) one or a plurality of catalysts for polyurethane formation,
b4) one or a plurality of di- and/or triisocyanates and
b5) an additive with a particle size in the range of 1 to 650 nm where appropriate
is cured in the halves of the mould with continued conversion of the foam system and conversion of the gel system, forming an interface layer which is mechanically inseparable when destroyed.

8. The method according to claim 7, **characterized in that** when the foam system is coated with the gel system, the conversion factor is set at 40 to 95 %, due to the reaction path following mixing depending on the temperature of the components and catalysis of the systems.

9. The method according to one of the claims 7 or 8, **characterized in that** when the foam system is coated with the gel system, the conversion factor is set at 60 to 95 %, controlled by the time delay in applying the systems.

## Revendications

1. Connecteur de câbles en liaisons élastiques de polymère mousse synthétique-gel, **caractérisé en ce que** dans deux moitiés d'un corps moulé ouvert, il est fabriqué chaque fois d'abord une couche en mousse synthétique de polyuréthane librement moussante, élastique à demi dure et il est appliqué sur celle-ci une couche de gel également en un système de polyuréthane, de sorte que
dans la couche de gel, à partir des deux côtés du corps moulé, des extrémités de câble dénudées soient introduites et qu'elles soient reliées entre elles,
les extrémités de câble reliées soient entièrement enveloppées par le gel et
les deux moitiés du corps moulé soient assemblées de telle sorte que les deux couches de gel s'interpénètrent superficiellement d'une valeur comprise entre 1 nm et 2,5 µm et donnent naissance lors de l'assemblage à une liaison inamovible sur les couches,
par l'opération de scellement, une pression d'appui soit exercée sur les couches de gel, de sorte que ces dernières fléchissent et transmettent ce fléchissement sous la forme d'une pression exercée sur la couche de mousse synthétique, ce qui a pour effet de produire un corps moulé rempli.

2. Connecteur de câbles selon la revendication 1, **caractérisé en ce que** les systèmes de polyuréthane présentent un indice d'isocyanate compris entre 0,9 et 1,5.

3. Connecteur de câbles selon la revendication 1 ou la revendication 2, **caractérisé en ce que** lors de l'assemblage, il reste chaque fois une surface de séparation cohérente entre les systèmes de polyuréthane d'une part et entre les surfaces en gel.

4. Connecteur de câbles selon l'une quelconque des revendications 1 ou 3, **caractérisé en ce que** la tension de pénétration du système isolant s'élève à de 20 à 180 kV/mm.

5. Connecteur de câble selon l'une quelconque des revendications 1 à 4, **caractérisé en ce que** les systèmes de mousse synthétique sont constitués
(a) d'un ou de plusieurs alcool(s) de polyéther d'une masse moléculaire de 400 à 8000,
(b) le cas d'échéant, d'un ou de plusieurs agents élongateurs de chaîne,
(c) d'un ou de plusieurs agents aminés tertiaires en tant que catalyseurs,
(d) d'un ou de plusieurs composés organométalliques en tant que catalyseurs,
(e) le cas échéant, d'un ou de plusieurs adjuvants solides ou liquides,
(f) d'un ou de plusieurs agents moussants qui peuvent être physiques ou chimiques,
(g) d'un ou de plusieurs stabilisateurs,
(h) d'un ou de plusieurs di-isocyanates et/ou polyisocyanates.

6. Connecteur de câbles selon l'une quelconque des revendications 1 à 5, **caractérisé en ce que** les systèmes de gel de polyuréthane sont constitués
(a) d'un ou de plusieurs alcool (s) de polyéther dont l'indice hydroxyle se situe entre 28 et 90 mg KOH/g, produit(s) en majeure partie à partir d'un oxyde de propylène additionné sur une molécule d'amorçage avec une fonctionnalité hydroxyle comprise entre 2 et 3,
(b) d'un ou de plusieurs alcool(s) de polyéther dont l'indice hydroxyle se situe entre 102 et 500 mg KOH/g, produit(s) en majeure partie à partir d'un oxyde de propylène additionné sur une molécule d'amorçage avec une fonctionnalité hydroxyle comprise entre 2 et 4,
(c) d'un ou de plusieurs catalyseurs pour la formation du polyuréthane,
(d) le cas échéant d'un adjuvant d'une grandeur de particules de l'ordre de 1 à 650 nm,
(e) d'un ou de plusieurs di-isocyanates,
(f) le cas échéant, d'un ou de plusieurs triisocyanates.

7. Procédé de fabrication d'un connecteur de câbles selon l'une quelconque des revendications 1 à 6, **caractérisé en ce qu'**on ajoute en les faisant mousser
a) un premier système moussant constitué
a1) d'un ou plusieurs alcool(s) de polyéther d'une masse moléculaire de 400 à 8000,
a2) le cas échéant, d'un ou de plusieurs agents élongateurs de chaîne,
a3) d'un ou de plusieurs agents aminés tertiaires en tant que catalyseurs,
a4) d'un ou de plusieurs composés organométalliques en tant que catalyseurs,
a5) le cas échéant, d'adjuvants solides ou liquides,
a6) d'un ou de plusieurs agents moussants qui peuvent être physiques ou chimiques,
a7) d'un ou de plusieurs stabilisateurs,
a8) d'une ou de plusieurs di-isocyanates et/ou polyisocyanates
dans les moitiés ouvertes du corps moulé et **en ce que** dans les 5 secondes à 30 mn, on fait durcir dans les moitiés du corps moulé
b) un deuxième système gélifiant constitué
b1) d'un ou de plusieurs alcool(s) de polyéther dont l'indice hydroxyle se situe entre 28 et 90 mg KOH/g, produit(s) en majeure partie à partir d'un oxyde de propylène additionné sur une molécule d'amorçage avec une fonctionnalité hydroxyle comprise entre 2 et 3,
b2) d'un ou de plusieurs alcool(s) de polyéther dont l'indice hydroxyle se situe entre 102 et 500 mg KOH/g, produit(s) en majeure partie à partir d'un oxyde de propylène additionné sur une molécule d'amorçage avec une fonctionnalité hydroxyle comprise entre 2 et 4,
b3) d'un ou de plusieurs catalyseurs pour la formation du polyuréthane,
b4) d'un ou de plusieurs tri-isocyanates et
b5) le cas échéant d'un adjuvant d'une grandeur de particules de l'ordre de 1 à 650 nm
sous poursuite de la transformation du système moussant et transformation du système gélifiant sous formation d'une couche de séparation non dissociable mécaniquement sous destruction.

8. Procédé selon la revendication 7, **caractérisé en ce que** lors du recouvrement du système moussant avec le système gélifiant, on règle à de 40 à 95 % le taux de transformation qui dépend de l'évolution de la réaction après l'opération de mélange, en fonction de la température des composants et de la catalyse des systèmes.

9. Procédé selon l'une quelconque des revendications 7 ou 8, **caractérisé en ce que** lors du recouvrement du système moussant avec le système gélifiant, on règle à de 60 à 95 % le taux de transformation piloté par le décapage dans le temps de l'application des systèmes.
